# EUROPÄISCHE PATENTANMELDUNG

(11) **EP 0 682 303 A1**
(43) Veröffentlichungstag der Anmeldung: **15.11.1995**
(21) Anmeldenummer: 95105874.2
(22) Anmeldetag: 20.04.1995
(51) Int. Cl.: G05B 19/042

(54) **Steuergerät**

(30) Priorität: 13.05.1994 DE 4416879
(71) Anmelder: ROBERT BOSCH GMBH, 70442 Stuttgart (DE)
(72) Erfinder: Burger, Wilfried, Dr. Dipl.-Phys., D-71282 Hemmingen (DE)

(57) **Zusammenfassung**

Es wird ein Steuergerät vorgeschlagen, das insbesondere für eine Motorsteuerung dient. Das Steuergerät (10) weist einen Mikrorechner (20) auf. Es weist weiterhin eine serielle Schnittstelle (21) zum Senden und/oder Empfangen von Daten über eine an das Steuergerät (10) anschließbare serielle Datenübertragungsleitung (14) auf. Es ist so ausgelegt, daß es mit einer weiteren seriellen Datenübertragungsleitung (15) verbindbar ist und Mittel (22, 23, 29) aufweist, die eine Umschaltung zwischen den anschließbaren seriellen Datenübertragungsleitungen (14, 15) bewirken, so daß die serielle Schnittstelle (21) in dem einen Fall mit der ersten anschließbaren seriellen Datenübertragungsleitung (14) verbunden ist und in dem anderen Fall mit der weiteren seriellen Datenübertragungsleitung (15) verbunden ist.

## Beschreibung

### Stand der Technik

Die Erfindung geht aus von einem Steuergerät nach der Gattung des Hauptanspruchs. Es ist schon ein Steuergerät aus der EP-23 17 43 B1 bekannt. In dieser Druckschrift ist ein Steuergeräteverbund für ein Kraftfahrzeug beschrieben. So ist z.B. ein Motor-Steuergerät, ein Getriebe-Steuergerät, ein Brems-Steuergerät, ein Fahrgeschwindigkeitsregler, ein Steuergerät für eine Fahrwerkregelung und ein Diagnose-Steuergerät enthalten. Alle genannten Steuergeräte sind über einen gemeinsamen seriellen Datenbus miteinander verbunden. Jedes einzelne der genannten Steuergeräte weist dabei für die Datenübertragung eine serielle Schnittstelle auf.

In der letzten Zeit ergab sich die Forderung von Seiten der Autoindustrie, daß bestimmte Steuergeräte, insbesondere ein Motorsteuergerät, eine zweite serielle Schnittstelle aufweisen sollte oder zumindest in der Lage sein sollte, mit einer zweiten seriellen Datenübertragungsleitung zu kommunizieren. Über diese zweite serielle Schnittstelle sollte dann der Code von einer Wegfahrsperre (auch als Immobilizer) bezeichnet, zu dem Motorsteuergerät übertragen werden.

Die erwähnte Lösung der Vorsehung einer zweiten seriellen Schnittstelle in einem Motorsteuergerät ist jedoch wegen des zusätzlichen Schaltungsaufwandes keine kostengünstige Lösung und für ein Großserienprodukt wie ein Motorsteuergerät unakzeptabel.

Auch eine weitere bekannte Lösung, bei der die zusätzliche serielle Übertragungsleitung mit einem Input/Output-Port des Mikrorechners im Kraftfahrzeug-Steuergerät verbunden wird, hat sich als nicht akzeptabel herausgestellt. Diese Lösung verursacht nämlich eine hohe Rechenbelastung des Mikrorechners, zusätzlichen Programmcode und einen zusätzlichen Aufwand für die Programmerstellung des Mikrorechners. Außerdem sind dabei auch Einschränkungen für die maximal mögliche Übertragungsrate vorhanden.

### Vorteile der Erfindung

Das erfindungsgemäße Steuergerät mit dem kennzeichnenden Merkmal des Hauptanspruchs hat demgegenüber den Vorteil, daß es nur eine schaltungsmäßig vorhandene serielle Schnittstelle aufweist und trotzdem eine Kommunikation mit mehreren unabhängigen seriellen Datenübertragungsleitungen möglich ist. Dabei ist jedoch vorauszusetzen, daß zu einem gegebenen Zeitpunkt jeweils nur eine der möglichen seriellen Datenübertragungsleitungen vom Steuergerät bedient wird. Dies trifft aber z.B. für den hier betrachteten Fall zu, bei dem ein Steuergerät (z.B. Motorsteuergerät) mit einem Steuergerät für eine Wegfahrsperre kommunizieren muß und aber auch in der Lage sein muß z.B. mit einem extern angeschlossenen oder im Kraftfahrzeug bereits vorhandenen Diagnosegerät zu kommunizieren. Die Kommunikation mit dem Steuergerät für die Wegfahrsperre ist nur beim Einschalten und ggf. noch beim Ausschalten des Steuergerätes sowie bei aufgetretenen Störungen nötig. Für diese Fälle ist es dann akzeptabel, daß das Steuergerät nicht mit dem Diagnosegerät kommunizieren kann. Eine bestehende Kommunikation wird bei einer Störung bzw. beim Ausschalten sowieso abgebrochen.

Durch die in den Unteransprüchen aufgeführten Maßnahmen sind vorteilhafte Weiterbildungen und Verbesserungen des im Hauptanspruch angegebenen Steuergerätes möglich. So ist es z.B. vorteilhaft, daß das Steuergerät als Mittel zur Umschaltung zwischen den seriellen Datenübetragungsleitungen mindestens einenn elektronisch steuerbaren Umschalter, insbesondere einen CMOS-Multiplexer aufweist und daß das Schaltsignal für den Umschalter von dem Mikrorechner ausgegeben wird. Diese elektronisch steuerbaren Umschalter sind platzsparend insbesondere auf einem integrierten Schaltkreis herstellbar.

Weiterhin vorteilhaft ist, daß zwischen dem elektronisch steuerbaren Umschalter und den anschließbaren seriellen Datenübertragungsleitungen eine Busankoppelschaltung vorgesehen wird, die eine Signalanpassung der über die seriellen Datenübertragungsleitungen empfangenen und/oder zu sendenen Signale bewirkt. Dadurch wird es möglich, daß für die Übertragung der Daten über die serielle Datenübertragungsleitung quasi beliebige Spannungspegel verwendet werden können. Im Kraftfahrzeug werden häufig für die serielle Datenübertragung Signalpegel verwendet, die zwischen der Batteriespannung und Massepotential schwanken. Ein Mikrorechner eines Steuergerätes kann jedoch häufig nur Spannungspegel von 0 Volt bis 5 Volt verarbeiten.

Für den Fall, daß alle an das Steuergerät angeschlossenen seriellen Datenübertragungsleitungen die gleichen Spannungspegel verwenden, ist es sehr vorteilhaft, wenn die Busankoppelschaltung zwischen dem elektronisch steuerbaren Umschalter und der seriellen Schnittstelle vorgesehen wird. In diesem Fall reicht nämlich ein einzelner elektronisch steuerbarer Umschalter für die Umschaltung aus, vorausgesetzt es handelt sich bei den seriellen Datenübertragungsleitungen um einfache Eindraht-Leitungen.

Ebenfalls vorteilhaft ist, wenn die elektronisch steuerbaren Umschalter zusammen mit der/den Busankoppelschaltungen auf einem Peripherie IC integriert sind. Damit läßt sich der Schaltungsaufwand für das Steuergerät verringern, so daß die Herstellungskosten reduziert sind.

Weiterhin vorteilhaft ist, daß die im Steuergerät vorgesehene serielle Schnittstelle als Zwei-Draht-Schnittstelle für eine Voll-Duplex-Übertragung ausgelegt ist. Damit können hohe Übertragungsraten für den Datenaustausch zwischen den Steuergeräten erreicht werden.

Ist jedoch diese hohe Datenübertragungsrate gar nicht erforderlich, so ist es vorteilhaft, wenn die serielle Schnittstelle nur als Ein-Draht-Schnittstelle für Halb-Duplex-Betrieb ausgelegt ist.

Um den Schaltungsaufwand weiter zu verringern, ist es vorteilhaft, wenn die serielle Schnittstelle zusammen mit dem Mikrorechner auf einem Mikrochip integriert ist. Für den hier betrachteten Anwendungsfall, bei dem ein Motor-Steuergerät mit einem Steuergerät für eine Wegfahrsperre über eine serielle Datenübertragungsleitung verbunden ist und mit einem externen oder internen Diagnosegerät über eine weitere serielle Datenübertragungsleitung verbindbar ist, ist es vorteilhaft, wenn das Motor-Steuergerät nach seiner Inbetriebnahme zuerst mit der seriellen Datenübertragungsleitung zur Verbindung mit dem Steuergerät für die Wegfahrsperre verbunden wird und erst dann die Verbindung mit der weiteren seriellen Datenübertragungsleitung herstellt, wenn es von dem Steuergerät für die Wegfahrsperre einen vorbestimmten Signalcode empfangen hat. Dadurch ist dann weitgehend sichergestellt, daß eine Kommunikation über die weitere serielle Datenübertragungsleitung nur dann stattfinden kann, wenn eine berechtigte Inbetriebnahme vorlag.

### Zeichnung

Zwei Ausführungsbeispiele der Erfindung sind in der Zeichnung dargestellt und in der nachfolgenden Beschreibung näher erläutert. Es zeigen Figur 1 eine schematische Darstellung eines Steuergeräte-Verbundes, bei dem das erfindungsgemäße Steuergerät eingesetzt ist; Figur 2 ein Blockschaltbild für ein erstes Ausführungsbeispiel des erfindungsgemäßen Steuergerätes; Figur 3 ein Blockschaltbild für ein zweites Ausführungsbeispiel des erfindungsgemäßen Steuergerätes und Figur 4 ein Flußdiagramm für den Mikrorechner des erfindungsgemäßen Steuergerätes.

### Beschreibung der Erfindung

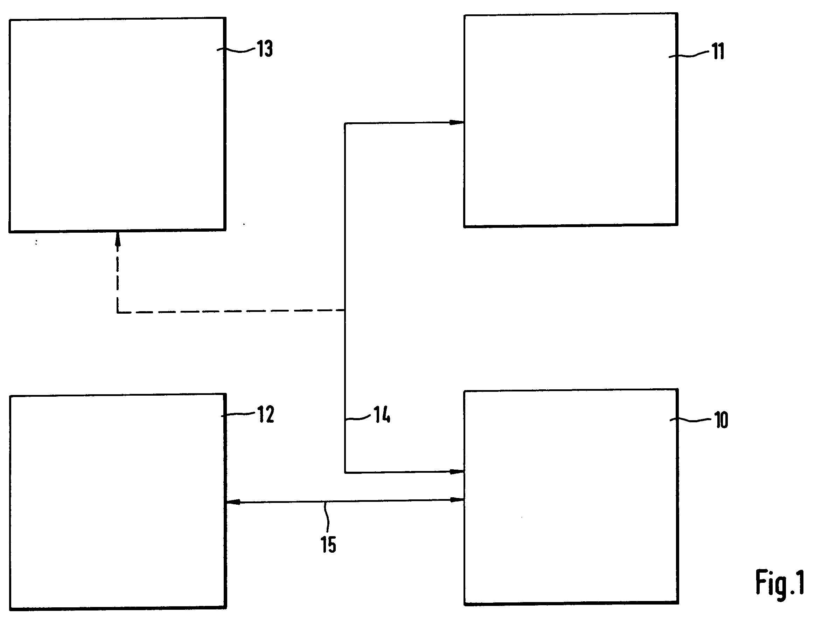

In Figur 1 bezeichnet die Bezugszahl 10 ein Motor-Steuergerät für eine Brennkraftmaschine eines Kraftfahrzeuges. Mit der Bezugszahl 11 ist ein Getriebesteuergerät für das Kraftfahrzeug bezeichnet. Beide Steuergeräte 10 und 11 sind über eine serielle Datenübertragungsleitung 14 miteinander verbunden. Mit der Bezugszahl 13 ist ein externes Diagnosegerät bezeichnet. Dieses Diagnosegerät 13 wird z.B. zu Inspektionszwecken eingesetzt d. h., wenn sich das Kraftfahrzeug in der Werkstatt befindet. In diesem Fall wird das Diagnosegerät 13 über einen Anschluß an die serielle Datenübertragungsleitung 14 angeschlossen. Das Diagnosegerät 13 kann dann mit dem Getriebesteuergerät 11 und dem Motorsteuergerät 10 kommunizieren. Es fragt die Diagnosedaten beider Steuergeräte ab. Ist in einem der Steuergeräte ein Fehler aufgetreten, so wird ein dementsprechendes Fehlerwort in einem Speicher dieses Steuergerätes abgelegt. Dieses Fehlerwort wird dann bei der Inspektion von dem Diagnosegerät 13 abgefragt. Aufgetretene Fehler können dann leichter behoben werden.

An das Motorsteuergerät 10 ist weiterhin ein Steuergerät 12 für eine Wegfahrsperre angeschlossen. Die Verbindung zu dem Steuergerät 12 für die Wegfahrsperre ist dabei über eine separate serielle Datenübertragungsleitung 15 hergestellt. Damit ist gewährleistet, daß kein anderes Steuergerät über diese serielle Datenübertragungsleitung 15 Daten übertragen kann, so daß das Datenübertragungsprotokoll für diese Datenübertragung über die serielle Datenübertragungsleitung 15 einfach ausgelegt sein kann. Insbesondere können keine Buszugriffskonflikte auftreten. Über die serielle Datenübertragungsleitung 15 wird bei Inbetriebnahme des Kraftfahrzeuges von dem Steuergerät 12 für die Wegfahrsperre ein definierter Sicherungscode zu dem Motorsteuergerät 10 übertragen. Das Motorsteuergerät 10 ist so programmiert, daß es zuerst den Sicherungscode abfragt bevor es sein eigentliches Steuerprogramm in Betrieb nimmt. Dadurch ist dann ein unbefugter Start des Kraftfahrzeuges verhindert. Das Steuergerät 12 für die Wegfahrsperre gibt nämlich den Sicherungscode nur dann ab, wenn der Fahrer entweder den korrekten Schlüssel für das Kraftfahrzeug nachgewiesen hat oder einen bestimmten Zahlencode eingegeben hat. Dies kann z.B. auch mit Hilfe einer Magnetkarte geschehen.

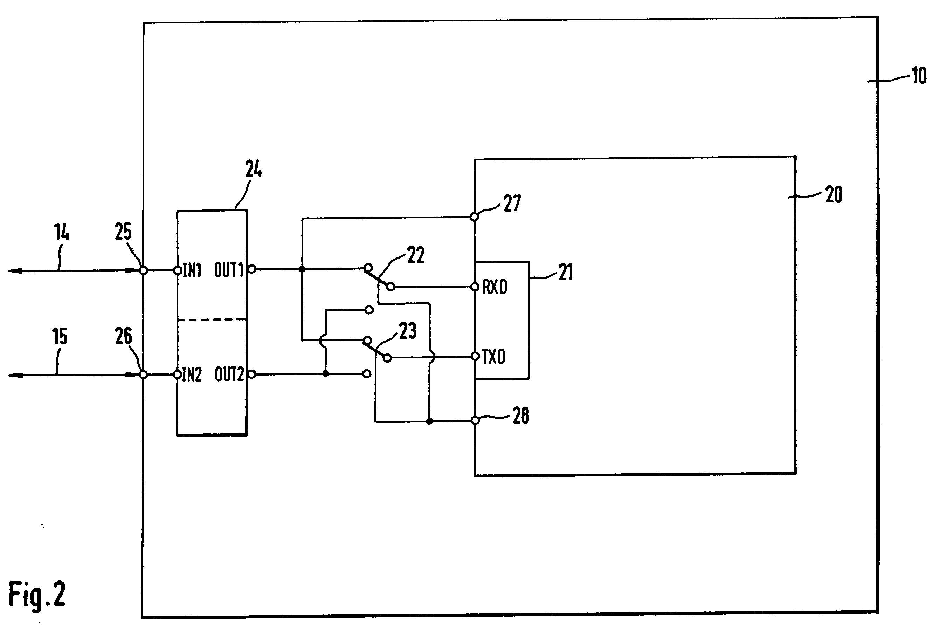

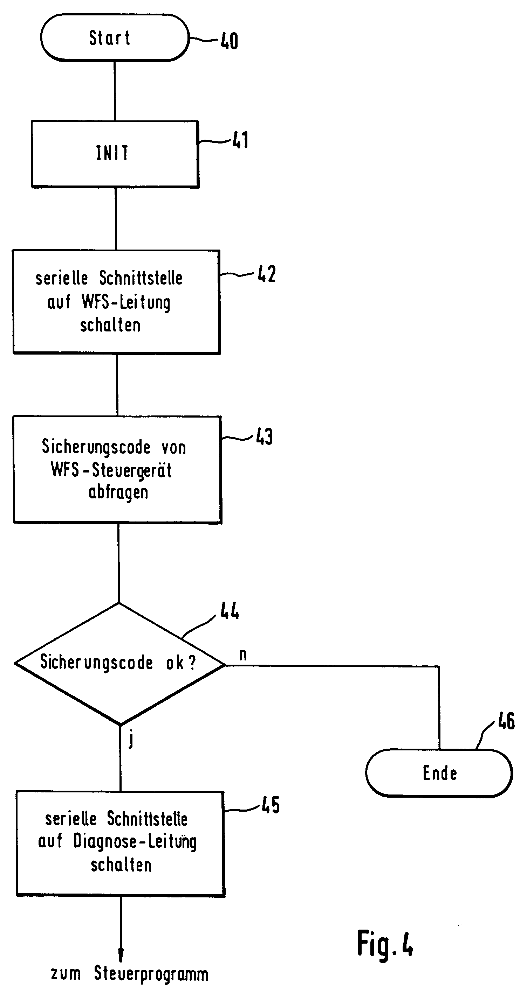

Auf die Arbeitsweise des Motorsteuergerätes 10 wird aber nachfolgend noch bei der Beschreibung der Figur 4 näher eingegangen. In der Figur 2 bezeichnet die Bezugszahl 10 wieder das Motorsteuergerät. Mit der Bezugszahl 20 ist der Mikrorechner des Motorsteuergerätes 10 bezeichnet. Der Mikrorechner 20 weist eine serielle Schnittstelle 21 auf. Derartige serielle Schnittstellen sind aus dem Stand der Technik hinreichend bekannt. Deshalb wird an dieser Stelle auf eine nähere Beschreibung der seriellen Schnittstelle 21 verzichtet. An den RXD-Eingang der seriellen Schnittstelle 21 ist ein erster elektronisch steuerbarer Umschalter 22 angeschlossen. An den TXD-Ausgang der seriellen Schnittstelle 21 ist ein zweiter elektronisch steuerbarer Umschalter 23 angeschlossen. Als Beispiel für einen elektronisch steuerbaren Umschalter wird hier ein einfacher Zweifach-Multiplexer mit zwei Eingängen und einem Ausgang genannt, der die Funktion des elektronisch steuerbaren Umschalters 22, 23 ausführen kann. Zu jedem der elektronisch steuerbaren Umschalter 22, 23 führt von dem Mikrorechner 20 ausgehend eine Steuerleitung. Über die Steuerleitung kann der Mikrorechner 20 den Schaltzustand der elektronisch steuerbaren Umschalter vorgeben. In diesem Ausführungsbeispiel ist es so dargestellt, daß der Mikrorechner 20 nur beide elektronisch steuerbaren Schalter 22 und 23 gemeinsam umschalten kann. In einer weiteren Ausgestaltung der Erfindung könnte es jedoch auch vorgesehen sein, daß diese Umschaltung auch einzeln von dem Mikrorechner vorgegeben sein kann. Von dem elektronisch steuerbaren Umschalter 22 führt eine Verbindung zu einem ersten Ausgang OUT1 einer Busankoppelschaltung 24. Eine weitere Verbindungsleitung führt von dem zweiten Kontakt des elektronisch steuerbaren Schalters 22 zu einem zweiten Ausgang OUT2 der Busankoppelschaltung 24. Von dem elektronisch steuerbaren Schalter 23 führt ein Anschlußkontakt über eine Verbindungsleitung zu dem Ausgang OUT1 der Busankoppelschaltung 24. Außerdem führt von dem zweiten Kontakt des elektronisch steuerbaren Schalters 23 eine Verbindungsleitung zu dem zweiten Ausgang OUT2 der Busankoppelschaltung 24. An den Eingang IN1 der Busankoppelschaltung 24 ist ein Anschluß 25 des Steuergerätes 10 angeschlossen. An den Eingang IN2 der Busankoppelschaltung 24 ist ein weiterer Anschluß 26 des Steuergerätes 10 angeschlossen. Der Anschluß 25 steht mit der seriellen Datenübertragungsleitung 14 in Verbindung. Der Anschluß 26 steht mit der seriellen Datenübertragungsleitung 15 in Verbindung. Die Busankoppelschaltung 24 ist, wie durch die gestrichelte Linie dargestellt, zweigeteilt. In dem oberen Teil werden die Signale, die über die serielle Datenübertragungsleitung 14 zum Eingang IN1 der Busankoppelschaltung gelangen, so aufbereitet, daß die serielle Schnittstelle 21 des Mikrorechners 20 diese Signale verarbeiten kann. Dies ist insbesondere dann erforderlich, wenn die Signalpegel auf der seriellen Datenübertragungsleitung 14 zwischen der Batteriespannung und Massepotential schwanken. Durch die Busankoppelschaltung 24 wird dann der Signalpegel so angepaßt, daß am Ausgang dieser Busankoppelschaltung lediglich Signale auftreten, die zwischen 5 Volt und Massepotential schwanken. Damit können diese Signale einfach von dem Mikrorechner 20 verarbeitet werden. Die Busankoppelschaltung besteht aus Widerständen und Treiberstufen; der konkrete Aufbau richtet sich nach den Übertragungsraten und den Signalpegeln, für den anzuschließenden seriellen Bus. Wenn zur Datenübertragung über die serielle Datenübertragungsleitung 15 andere Signalpegel verwendet werden, werden diese in dem unteren Teil der Busankoppelschaltung 24 so angepaßt, daß ebenfalls am Ausgang OUT2 der Busankoppelschaltung 24 nur Signale auftreten, die höchstens zwischen 5 V und Massepotential schwanken können. An den Ausgang OUT1 der Busankoppelschaltung 24 ist weiterhin noch eine Verbindungsleitung zu einem separaten Eingang 27 des Mikrorechners 20 geführt. Diese Verbindungsleitung dient dazu, daß selbst dann, wenn der Mikrorechner 20 eine Kommunikation über die serielle Datenübertragungsleitung 15 durchführt, der Mikrorechner feststellen kann, ob z.B. das Getriebesteuergerät 11 oder ein angeschlossener Diagnosetester 13 ein Anforderungssignal über die serielle Datenübertragungsleitung 14 zu dem Steuergerät 10 übermittelt oder nicht. Dies kann dadurch erreicht werden, daß der Mikrorechner 20 in größeren Zeitabständen den Eingang 27 abfragt. Nachdem die Kommunikation mit dem Steuergerät für die Wegfahrsperre 12 abgeschlossen ist, kann dann der Mikrorechner 20 sofort ein Rückmeldesignal über die serielle Datenübertragungsleitung 14 ausgeben. Eine nochmalige Anforderung von seiten des externen Diagnosegerätes 13 ist dann nicht mehr erforderlich. Busankoppelschaltung 24 und elektronisch steuerbare Umschalter 22, 23 können auch auf einem gemeinsamen integrierten Schaltkreis enthalten sein.

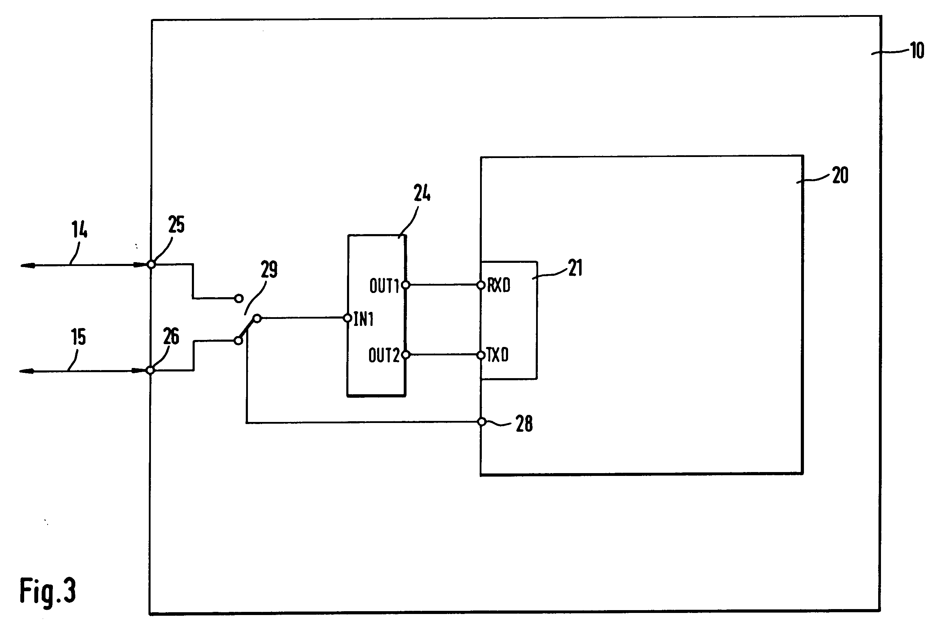

Ein zweites Ausführungsbeispiels eines erfindungsgemäßen Steuergerätes zeigt die Figur 3. Gleiche Bezugszahlen bezeichnen hier das Gleiche, wie in Figur 2. Der wesentliche Unterschied zwischen beiden Ausführungsbeispielen besteht darin, daß in diesem Ausführungsbeispiel die Signalpegel, die zur Datenübertragung über die seriellen Übertragungsleitungen 14 und 15 verwendet werden, in beiden Fällen zwischen näherungsweise gleichen Spannungen schwanken. In diesem Fall braucht lediglich ein elektronisch ansteuerbarer Umschalter 29 vorgesehen werden. Dieser schaltet dann zwischen den beiden Busleitungen 14 und 15 um. Die Busankoppelschaltung 24 wird dann für beide seriellen Datenübertragungsleitungen 14 und 15 gemeinsam verwendet.

Nachfolgend wird noch die Arbeitsweise des Mikrorechners 20 für beide Ausführungsbeispiele anhand der Figur 4 erläutert. Durch Drehen des Zündschlüssels des Kraftfahrzeuges werden die Steuergeräte 10, 11, 12 in Betrieb genommen. Dadurch wird das Programm im Steuergerät 10 von dem Mikrorechner im Programmschritt 40 gestartet. Nach dem Programmstart findet eine Initialisierungsphase des Mikrorechners statt. Dabei überprüft er z.B. den Speicherinhalt des Steuergerätes. Es könnten aber auch weitere Tests ablaufen, wie z.B. die Überprüfung angeschlossener Bauteile mittels Plausibilitätsüberprüfungen. Nach der Initialisierungsphase 41 werden die elektronisch steuerbaren Umschalter 22, 23, 29 so umgeschaltet, daß die serielle Schnittstelle 21 des Mikrorechners 20 mit der seriellen Datenübertragungsleitung 15 verbunden wird. Dies findet im Programmschritt 42 statt. Hierzu gibt der Mikrorechner 20 die entsprechenden Umschaltsignale über seinen Ausgang 28 an die elektronisch steuerbaren Schalter 22, 23, 29 ab. Anschließend findet im Programmschritt 43 eine Kommunikation mit dem Steuergerät für die Wegfahrsperre 12 statt. Dabei wird ein Sicherungscode von dem Steuergerät für die Wegfahrsperre 12 zu dem Motorsteuergerät 10 übermittelt. Das Programm des Mikrorechners 20 überprüft den empfangenen Sicherungscode, indem es ihn mit einem Muster, das in seinem Speicher abgelegt ist, vergleicht. Dies findet in der Abfrage 44 statt. Wenn kein sinnvoller Code empfangen wurde, oder wenn ein abweichender Code empfangen wurde, beendet der Mikrorechner 20 die Abarbeitung des Programms im Programmschritt 46. Dadurch ist sichergestellt, daß das Motorsteuergerät 10 und damit das Kraftfahrzeug nur dann in Betrieb genommen wird, wenn die berechtigte Inbetriebnahme durch Empfang des korrekten Sicherungscodes nachgewiesen ist.

Wurde der richtige Sicherungscode vom Mikrorechner 20 empfangen, so verzweigt der Mikrorechner zum Programmschritt 45, in dem er die elektronisch steuerbaren Umschalter 22, 23, 29 so umschaltet, daß die serielle Schnittstelle 21 nunmehr mit der seriellen Datenübertragungsleitung 14 verbunden wird. Anschließend ruft er dann sein eigentliches Steuerprogamm auf, so daß der Motor gestartet werden kann. Ist an die serielle Datenübertragungsleitung 14 ein Diagnosegerät 13 angeschlossen, so kann jetzt nachfolgend der Fehlerspeicher des Steuergerätes 10 von dem Diagnosegerät 13 ausgelesen werden.

Das erfindungsgemäße Steuergerät ist nicht auf die hier beschriebenen Ausführungsbeispiele beschränkt. So ist es insbesondere auch möglich, daß das elektronische Steuergerät 10 mit einer Zwei-Draht-Schnittstelle ausgestattet ist. In diesem Fall werden für die serielle Datenübertragung über eine serielle Datenübertragungsleitung 14, 15 jeweils zwei Drähte benötigt. Um dann eine Umschaltung zwischen derartigen seriellen Datenübertragungsleitungen durchzuführen, müßten gemäß des ersten Ausführungsbeispiels vier elektronisch steuerbare Umschalter und gemäß des zweiten Ausführungsbeispiels zwei elektronisch steuerbare Umschalter vorgesehen werden. Über eine serielle Zwei-Draht-Schnittstelle könnten dann gleichzeitig Daten von und zum Steuergerät 10 übertragen werden (Voll-Duplex-Betrieb). Auch eine Umschaltung der Zwei-Draht-Schnittstelle von Zwei-Draht-Betrieb auf Ein-Draht-Betrieb wäre möglich. Darüber hinaus könnte auch eine Umschaltung zwischen mehr als zwei an das Steuergerät angeschlossenen seriellen Datenübertragungsleitungen realisiert werden. Pro weiterer serieller Datenübertragungsleitung wäre dann nur ein zusätzlicher Ausgang des Mikrorechners erforderlich. Würde man stattdessen weitere serielle Schnittstellen in dem Mikrorechner vorsehen, so wären dafür statt einem mindestens zwei zusätzliche Mikrorechner-Ports sowie zusätzliche Chip-Fläche für diese weitere Schnittstelle, notwendig.

## Patentansprüche

1. Steuergerät, insbesondere Kraftfahrzeug-Steuergerät, mit einem Mikrorechner, mit einer seriellen Schnittstelle zum Senden und/oder Empfangen von Daten über eine an das Steuergerät anschließbare serielle Datenübertragungsleitung, dadurch gekennzeichnet, daß an das Steuergerät (10) mindestens eine weitere serielle Datenübertragungsleitung (15) anschließbar ist, daß das Steuergerät (10) Mittel (22, 23, 29) aufweist, um eine Umschaltung zwischen den anschließbaren seriellen Datenübertragungsleitungen (14, 15) vorzunehmen, so daß die serielle Schnittstelle (21) je nach Umschaltung mit einer der anschließbaren seriellen Datenübertragungsleitungen (14, 15) verbunden ist.

2. Steuergerät nach Anspruch 1, dadurch gekennzeichnet, daß als Mittel zur Umschaltung zwischen den seriellen Datenübertragungsleitungen (14, 15) mindestens ein elektronisch steuerbarer Umschalter (22, 23, 29), insbesondere CMOS-Multiplexer, vorgesehen ist und daß das Schaltsignal für den Umschalter (22, 23, 29) von dem Mikrorechner (20) ausgebbar ist.

3. Steuergerät nach Anspruch 1 oder 2, dadurch gekennzeichnet, daß zwischen dem mindestens einen elektronisch steuerbaren Umschalter (22, 23) und den anschließbaren seriellen Datenübertragungsleitungen (14, 15) eine Busankoppelschaltung (24) vorgesehen ist, die eine Signalanpassung der über die seriellen Datenübertragungsleitungen (14, 15) empfangenen und/oder zu sendenden Signale für die serielle Schnittstelle (21) bewirkt.

4. Steuergerät nach Anspruch 1 oder 2, dadurch gekennzeichnet, daß zwischen dem mindestens einen elektronisch steuerbaren Umschalter (29) und der seriellen Schnittstelle (21) eine Busankoppelschaltung (24) vorgesehen ist, die eine Signalanpassung der über die seriellen Datenübertragungsleitungen (14, 15) empfangenen und/oder zu sendenden Signale für die serielle Schnittstelle (21) bewirkt.

5. Steuergerät nach einem der vorhergehenden Ansprüche, dadurch gekennzeichnet, daß die Busankoppelschaltung (24) und der mindestens eine elektronisch steuerbare Umschalter (22, 23, 29) zusammen auf einem Peripherie-Baustein für den Mikrorechner (20) integriert sind.

6. Steuergerät nach einem der vorhergehenden Ansprüche, dadurch gekennzeichnet, daß die serielle Schnittstelle (21) als Zwei-Draht-Schnittstelle für Voll-Duplex-Betrieb über die anschließbaren seriellen Datenübertragungsleitungen (14, 15) ausgelegt ist.

7. Steuergerät nach einem der Ansprüche 1 bis 5, dadurch gekennzeichnet, daß die serielle Schnittstelle (21) als Ein-Draht-Schnittstelle für Halb-Duplex-Betrieb über die anschließbaren seriellen Datenübertragungsleitungen (14, 15) ausgelegt ist.

8. Steuergerät nach einem der vorhergehenden Ansprüche, dadurch gekennzeichnet, daß die serielle Schnittstelle (21) zusammen mit dem Mikrorechner (20) auf einem Mikrochip integriert ist.

9. Steuergerät nach einem der vorhergehenden Ansprüche, dadurch gekennzeichnet, daß es als Motorsteuergerät für die Steuerung einer Brennkraftmaschine ausgelegt ist, daß es über die anschließbare serielle Datenübertragungsleitung (15) mit einem Steuergerät für eine Wegfahrsperre (12) verbindbar ist und über die weitere anschließbare serielle Datenübertragungsleitung (14) mit mindestens einem weiteren Kraftfahrzeug-Steuergerät (11), insbesondere Getriebe-Steuergerät und/oder Brems-Steuergerät und/oder mit einem Diagnosegerät (13) verbindbar ist und daß es nach seiner Inbetriebnahme die serielle Schnittstelle (21) zuerst mit der seriellen Datenübertragungsleitung (15) zur Verbindung mit dem Steuergerät für die Wegfahrsperre (12) verbindet und daß es nach dem Empfang eines vorbestimmten Signalcodes über diese serielle Datenübertragungsleitung (15) die serielle Schnittstelle (21) mit der weiteren seriellen Datenübertragungsleitung (14) verbindet.
